# EUROPEAN PATENT APPLICATION

(11) **EP 1 396 447 A1**
(43) Date of publication of application: **10.03.2004**
(21) Application number: 02724324.5
(22) Date of filing: 23.04.2002
(51) Int. Cl.: B65G 15/58, B65G 57/04, B21D 43/22

(54) **MACHINE FOR TRANSPORTING AND STACKING MAGNETIC AND NON-MAGNETIC SHEETS**

(30) Priority: 23.05.2001 ES 200101182
(71) Applicant: ASM, S.A., 43206 Reus (ES)
(72) Inventor: MOYA GARCIA, Jose, Julio, E-43206 Reus (ES)
(74) Representative: Urizar Anasagasti, José Antonio
(86) International application number: PCT/ES2002/000196
(87) International publication number: WO 2002/094693

(57) **Abstract**

The object of the present invention is related to a machine for transporting and piling sheeting, especially designed for transporting and piling sheets of both magnetic and non-magnetic material such as aluminium, stainless steel, etc. The sheets, once they are cut in a press, are transported to the transport position at the start of the installation; from there they are lifted and transferred onto the piling and transport machine. These sheets move in suspension by way of a conveyer belt, the machine being provided with a double system for the suspension of the sheets by way of electromagnets assembled along the path the magnetic sheets move along and by way of a vacuum suction system, also assembled along the movement path of non-magnetic sheets of aluminium or stainless steel.

## Description

### Object of the invention

The object of the present invention relates to a sheeting transport and piling machine, especially designed to transport and pile, indistinctly, sheets of magnetic material and sheets of non-magnetic material such as aluminium, stainless steel, etc.

### Background of the invention

The present invention is a logical consequence of the progress and the development of the industry in the race to decrease production costs as well as in reference to decreasing the costs of the finished product.

For this purpose, a machine has been developed that is designed, in the first place, to transport, and in the second place to carry out the final piling of magnetic and non-magnetic material transported from the cutting press to storage as piles, for subsequent operation.

These operations are common in the industry, since within production lines, in particular in the automobile industry, in body, door, etc. manufacturing, for years there has existed a pick-up system for transporting and piling magnetic sheets, and another one for non-magnetic sheets.

In order to carry out all of the operations described above (pick-up, transport and piling), in magnetic and non-magnetic sheets, the two systems described below exist:
A)- For ferromagnetic sheeting the systems developed are based on the magnetic characteristic of the sheeting whose main formation basis is iron, thus using the magnetic field produced by the magnets on metal materials for the suspension and gripping of the sheet, the development of this type of machines has thus been carried out by situating a set of permanent or non-permanent magnets arranged in a line between the transport strip and the metallic part to be transported, which is maintained in suspension until arrival at the piling location; there, by way of non-permanent, electrically controlled magnets, the sheets are situated in the unloading area.
   As examples of this system of gripping, transport and piling for magnetic materials, the following patents are cited:
   DE 196 36 086 A1
      TITLE: MAGNETIC BELT FOR TRANSPORT IN SUSPENSION OF SHEETING WITH SEVERAL SUSTAINING ELEMENTS PER MAGNET.
      European Patent No. EP 0231534
      TITLE: DEVICE FOR TRANSPORTING CANS FROM A PLATFORM TO A CONVEYER BELT
   P9601929 (Spain)
      TITLE: FRAMEWORK OF AUTOMATIC MULTIPLE MAGNETIC HEADS FOR SEPARATING MAGNETIC SHEETS.
B)- For non-ferromagnetic sheeting, the systems developed to carry out all of these gripping, transport and piling movements are based on two characteristics, one the non-porosity of the elements to be transported, and the other on the effects of suction produced by creating a vacuum inside a closed chamber. By way of a mechanism called Venturis or vacuum pumps, the air trapped inside a chamber is moved thus creating a vacuum in a controlled manner, which facilitates the suspension of any non-porous material.
   As an example of this suction, transport and piling system for non-ferromagnetic materials, the following patents are cited:
   European Patent Appln. No. 91110436
      TITLE: INDUCTION RETAINER
   P8802083 (Spain)
      TITLE: FORMAT FEEDER FOR SHEET TRANSFORMATION LINES

   With respect to the existing systems, the machine of the invention is able to carry out pick-up, transport and piling of both magnetic and non-magnetic sheets indistinctly, combining the two pre-existing systems in order to carry out said functions in a single machine.

### DESCRIPTION OF THE INVENTION

The present invention relates to a machine whose purpose consists of transporting magnetic and non-magnetic sheets, the maximum measurements of which are 4 m. x 2 m. x 3 mm. thick and with a weight from 50 kg. to 80 kg., from the start of manufacturing of these sheets in which the sheet is cut by way of a press, until it is piled in predetermined locations.

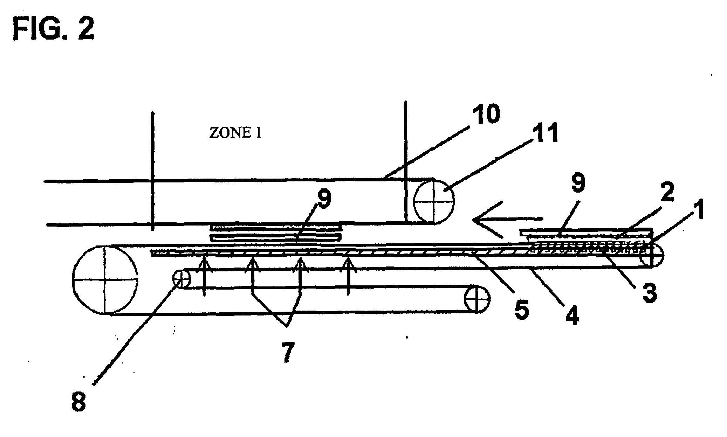

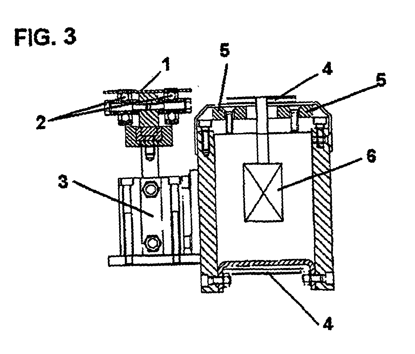

The sheeting proceeds from a roll or reel, which enters the cutting press by way of a feeder; once the press has cut the sheet, it is moved out of the cutting press by way of a roller path (figure 2 and 3), made up of shoes (1), on which a set of movement ball bearings (2) are mounted, this system facilitates the sheet being transported and deposited onto the feed belt (4).

In order to prevent the sheet (9) from being moved during transport, on this feed belt, the two gripping systems are mounted; with the magnets (5) for magnetic sheets and the vacuum pump (6) for non-magnetic sheets. Once the sheet has been positioned on top of the feed belt, this belt carries it to the transfer position from the transport and piling line. The movement of this feed belt is carried out by way of a numerically controlled motor.

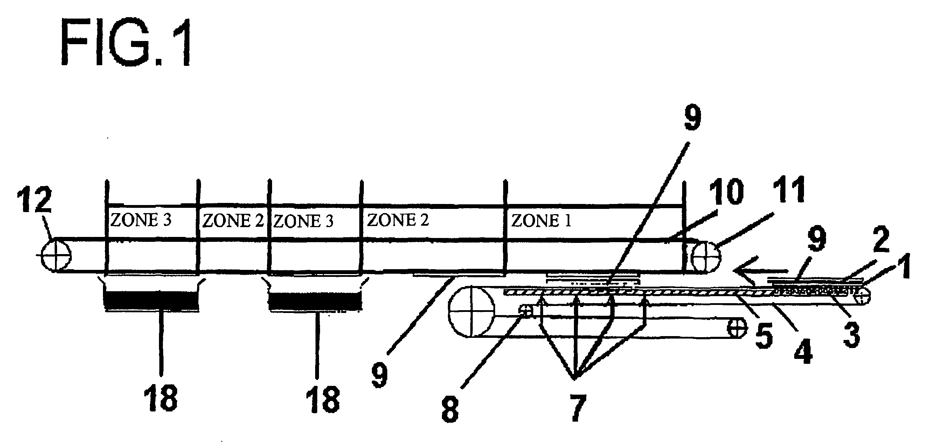

For sheets (9) whose length is shorter than 1.5 m., when the transfer position is reached (figure 1, zone 1), the feed belt (4) stops and shoes (7) that are motorised by a servomotor lift the sheet, and it is transferred to the conveyer belt (10).

For sheets (9) whose length is longer than 1.5 m., when the transfer position is reached (figure 1, zone 1), the feed belt (4) does not stop and the sheet (9) is held to the conveyer belt (10) directly by the magnets (13), if it is magnetic or by the vacuum systems (14) if it is not magnetic.

The transporter constructed with tubes and welded iron profiles is independent from the feeding assembly, it is made up of as many belts (10) as may be necessary in order to carry out the pick-up and transport of the sheets (9), normally formed by four or five belts assembled in parallel, as is the feed line. These belts are responsible for transporting the sheet from the initial transfer position, zone 1, with the feeding line, to the final piling position, zone 3, holding the sheet by way of the magnets (13), arranged in linear fashion along the whole path of the belt, or by way of vacuum heads (17), which hold the sheet by suction, also arranged in a linear fashion along the whole path up to its final storage point.

Description of the elements that make up the machine:
1) Roller path (1) see (figure 2), the sheet enters automatically into the press normally by way of a feeder. Once the press has cut the sheet (9), it has been situated on top of roller shoes (1), on which ball bearings (2) have been assembled in order to avoid excess friction between roller shoes (1) and the feed belts (4), these roller shoes are situated on top of and at the start of the feed belts (4), and assembled between these belts and affixed to a set of pneumatic pistons (3). Once the press has finished cutting the sheet these pistons descend, the sheet (9) being positioned on top of the feed belts (4).
2) Geared feeder belt (4) see (figure 2) held to the structure of welded tube, going from the sheet cutting press to the transfer zone, being assembled in said structure as many conveyer belts (4) in parallel as may be necessary in order to hold the sheet (9) adequately. The set of belts to be assembled will be given by the width of the cut sheet to be transported. Each feed belt includes, assembled at its ends, see (figure 3), two lines of permanent neodymium magnets (5), and in the central section of it, the set of vacuum pumps (6), which hold the sheet (9) by suction through conveniently placed holes in the feed belt (4).

This whole group of conveyer belts is motorised by a numerically controlled motor. The way the sheet is transferred from the feed belt to the transport belt is determined by the length of the sheet, so for both magnetic and non-ferromagnetic sheets but with lengths of less than 1.5 m., they advance along the feed belt (4) until they are stopped upon reaching the transfer point, in zone 1, at that moment a servomotor (7), which includes shoes, lifts the sheet towards the transport belt (10) situated vertically and on a higher plane than the sheet.

For the sheets (9) whose length is more than 1.5 m., the feed belt (4) advances carrying the sheet along the belt without stopping at the transfer zone, automatically continuing its advance held to the conveyer belt (10).

In order to adjust the precise distance from the cutting press to transfer zone 1 with the feed belt (4), it has been designed with a telescopic system (8), thus facilitating increasing the length of these feed belts (4) to double the minimum distance required for its perfect functioning.

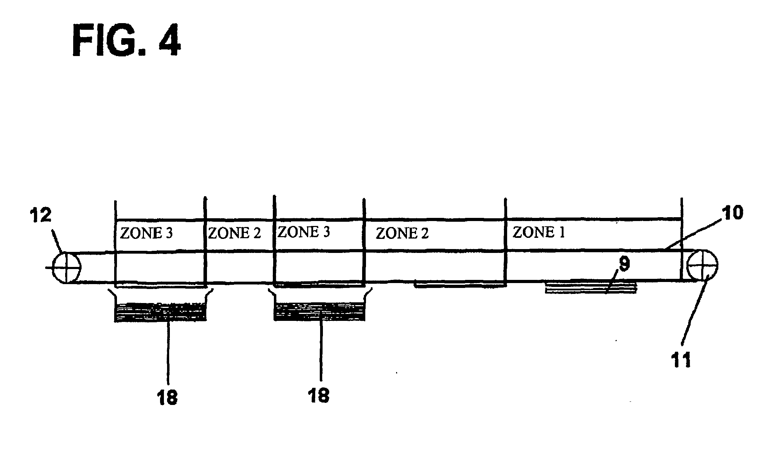

2) The transporter, see (figure 4), built of welded tubes, and whose structure is completely independent from the rest of the installation, is formed by a set of conveyer belts (10), normally between 4 or 5, assembled in parallel and necessary for holding and transporting the sheets (9).

The set of conveyer belts (10) that forms the machine is given by the width of the sheets (9) to be transported. These belts are responsible for carrying out the transport of the sheet with the feed line from the initial position, zone 1, for transfer to the final piling position, zone 3.

The conveyer belts (10) are flat in the area for holding the sheet and geared within their interiors, since the activation of these belts with the numerical control main motor is carried out by way of geared pulleys (11) and (12), thus avoiding possible slipping due to lack of traction. In order to provide the belt with greater security, its internal fibres are reinforced with steel wiring.

The way in which the sheets are to be held (9), when they are magnetic, depends on each of the zones; in the case of non-ferromagnetic sheets they are always held by vacuum heads (17).

Gripping magnetic sheets.
Zone 1, see (figure 4), for transfer, in this zone the electromagnets (13) are assembled in linear fashion in the centre of the conveyer belts, these electromagnets acquire their magnetic force from the flow of electrical current, so that when the sheet (9) is transferred from the feed belt (4) to the conveyer belt (10), the electrical current is sent through, thus producing the magnetic field instantly and during as long as necessary to move the sheet (9) from zone 1 to zone 2.
Zone 2, see (figure 4), for movement, this is the intermediate zone where the sheets should circulate held onto the belts (10). In this area the permanent magnets (13) are assembled, in the central part of the conveyer belts (10), all of the magnets of this zone being made of ferrite. On the outer sides of the belt the vacuum heads (17) are assembled in order to grip non-magnetic sheets.
Zone 3, see (figure 4), for piling (18), this is the first piling zone to be found; as in the previous two, magnets (13) have been assembled in the centre of the conveyer belts (10), but in this zone (18), the magnets are opposite to those of transfer zone 1, in other words, in this zone 3, the magnets (13) are permanent and only lose their magnetic field when the electrical current flows through them, this is due to the fact that when the sheet (9) advances through the whole machine it does not lose contact with the conveyer belt until it reaches the piling zone. As for the sheet (9), it is centred on this piling point; the electrical current makes the magnets lose their magnetic force and makes the sheet fall.

The transport and piling of non-ferromagnetic sheet is set up in the following way, see (figure 4, position 18). Along each conveyer belt (10) and on each side of them, high density aluminium or polystyrene profiles affixed to the magnet itself have been arranged, under which the belt (10) slides along; on these high density aluminium or polystyrene profiles, the suction heads (17) are assembled, through which the suction is effected on the sheet thanks to the holes (16) on the conveyer belts and the vacuum pumps (14).

The vacuum pumps (14) are found grouped in modules on each belt, with between 15 and 20 vacuum pumps assembled per linear meter, coinciding with the length of the electromagnets or the permanent magnets. Each vacuum pump is connected to a valve that produces the effect of cutting the air or flow so that the sheet falls when the suction is lost.

The conveyer belt (10) geared in its interior and flat on its exterior, consists of an interior centre strand of steel wires, thus providing greater resistance. At the ends of the belts, plastic profiles have been welded on as snugs (15) with which the sheets (9) make contact. These snugs (15) have holes (16) in them, just as the stainless sheeting, in order for the suction to pass through them. In order to reduce loss of suction, lateral bronze profiles are arranged to support the belt against the high-density aluminium or polystyrene profiles, thus leaving a minimal space that the suction can be lost through. The holes (16) have been made all along the belt.

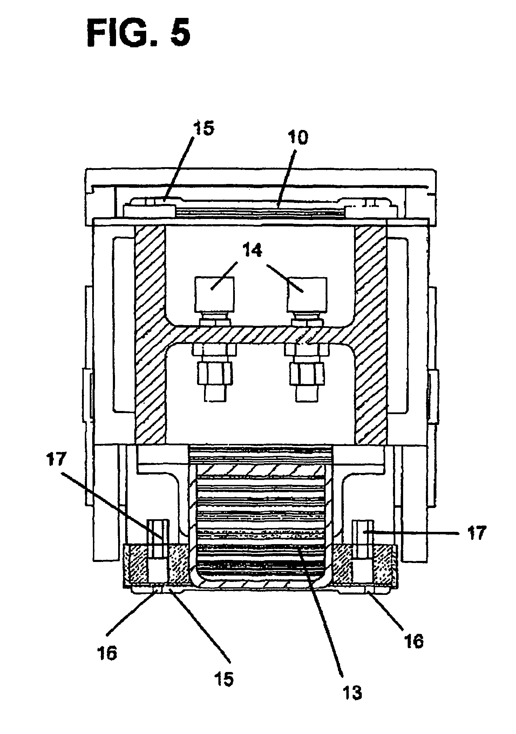

Although the set of all of the mechanisms assembled on said machine are already known individually in the industry, it is the first time that for transporting and piling sheeting the whole vacuum suction section and all of the set of both permanent and electromagnetic magnets are incorporated into the feed belts and the transport belts, within the same structure, fig. 5, or in other words that each belt included in the assembly of feed and transport belts is provided with both of the gripping and transport systems, increasing the overall efficiency, service, and performance of the machine.

### DETAILED DESCRIPTION OF THE DRAWINGS

In order to provide an improved understanding of the object of the present invention, a preferred practical embodiment of the present invention is described below, based on the attached figures.
Figure 1: Kinematical schema of the installation
Figure 2: Kinematical schema of the telescopic feed belt
Figure 3: Front section view, telescopic feed belt with roller shoes, belt, magnet and vacuum pump situation details
Figure 4: Kinematical schema conveyer belt and piling zones
Figure 5: Front section view, telescopic feed belt, with band, magnet and feed pump situation details

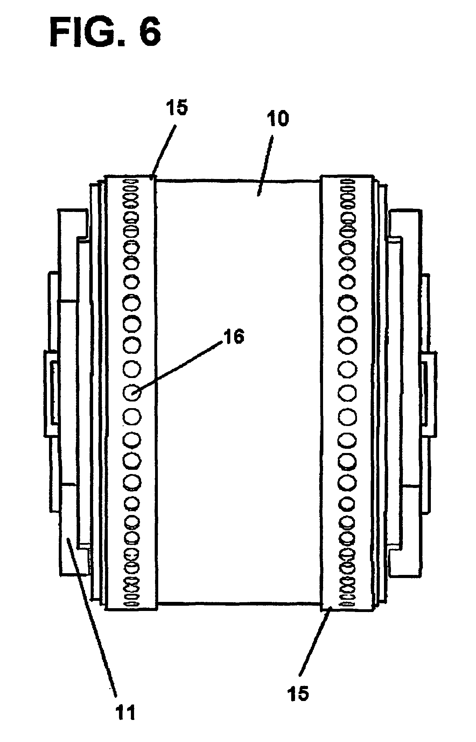

Figure 6: Front view of the transport belt

### PREFERRED EMBODIMENT OF THE INVENTION

In order to provide an improved understanding of the object of the invention, a preferred embodiment of the invention is described below.

The transport and piling machine for magnetic and non-magnetic sheeting consists of the following main groups in each of its modules.
Roller shoe support (fig. 2 pos.1)
Feeder assembly (fig. 2 pos. 4)
Transfer zone (fig. 2 zone 1)
Transport assembly (fig. 4)
Piling zones (fig. 4 zone 3)

### DESCRIPTION OF THE MODULES:

Roller shoe support (1), assembled at the exit of the cutting press, see (figure 2), and at the entrance of the feed belt and on a higher plane than the belt (4), its function is to position the sheet and hold it at the time it is being cut by the press and later to position it on top of the feed belts (4). For this purpose, the roller shoes (1) include a set of ball bearings (1) in order to help the sheeting to slide, which prevent rubbing. These roller paths (1) are held by pneumatic pistons (3), the function of which is to set down the sheet (9) on the feed belts (4).

Feed belt (4), responsible for transporting the sheet from the cutting press to the transfer zone, located in zone 1, held on a welded tube structure, see (figure 3), it is provided with the two systems for holding the sheet (9), in its central area the vacuum pumps (6) are assembled, in a proportion of between 15 and 20 pumps per linear meter, and on its sides two lines of magnets (5) are assembled, which in this case are permanent neodymium magnets, positioned just under the feed belt (4). This belt is provided with a telescopic advance and reverse system (8), so that it can be lengthened to adjust it to the situation it should be positioned in during installation, thus achieving the correct position between the roller path (1) and the transfer zone, zone 1.

Said feed belt (4), reinforced in its interior by steel wires, includes several holes in its centre, which coincide with the suction tubes, being through these holes where the sheet (9) is held with the belt (4).

This belt (4) is commanded by a numerically controlled motor, all of whose movements are programmed by way of a computer system, enabling the execution of different programs for sheets of different types and sizes.

Transfer zone, zone 1, is the end of the path of the sheet (9) on the feed belt (4), and as its name indicates, it is the zone where the sheet (9) is passed over to the conveyer belt (10). In this transfer zone, shoes, whose total length is 1.5 m., are found held onto servomotors (7), which, as soon as the sheet (9) is situated on top of them, make the belt stop and raise, carrying the sheet and moving towards the transport belt (10).

The length of these transfer shoes determine the fact that the sheets whose length is longer than 1.5 m. must be transferred without the feed (4) and conveyer belts (10) stopping, so that the transfer shoes take up a slanted position and facilitate the sheet (9) passing from one belt to another (10).

The transport assembly, (figure 4), whose structure is built of welded tubes, completely independent from the rest of the construction, is divided into five zones (fig. 4).
1- Zone 1: transfer
2- Zone 2: movement
3- Zone 3: piling (18), (first piling zone)
4- Zone 2: transfer (second transfer zone)
5- Zone 3: piling (18) (second piling zone).

The sheets (9) that have been transferred from the feed belt move through these zones to the piling zones, by way of an endless conveyer belt (10), which runs through all of the areas, by way of two geared pulleys: tensing geared pulley (11) and motor geared pulley (12). This conveyer belt (10) is geared in its interior, which is the section that enters into contact with the pulleys, thus avoiding possible slipping between the belt and the pulleys. On its other side or that which has contact with the sheet, it includes snugs (15) on its ends, which have round holes (16) in them, so that as the belt passes through the vacuum heads (17) always coincide with the minimum number of heads to support the non-magnetic sheets (9) as they move along, the vacuum being effected in these vacuum heads (17) by way of vacuum pumps (14), in the middle of the snugs (15), the conveyer belt (10), is flat in the section that passes just below the magnets (13), this suction modality being for magnetic sheets, changing the type of magnet depending on the zone.

For transfer zone 1 electromagnets are found assembled in linear fashion, thus producing a magnetic field with the flow of the electrical current. For movement zone 2, permanent magnets (13) are assembled in the centre of the transport belt, since in this zone the sheet (9) must always be adhered to the belt. For zone 3, permanent magnets (13) have also been placed in linear fashion in the centre of the belt, but lose their magnetic force with the flow of the electrical current, thus releasing the sheet (9) from the conveyer belt (10).

Having sufficiently described the nature of the present invention, as well as a practical embodiment, all that remains to be added is that the form, materials and arrangement may be altered, as long as said alterations do not substantially change the characteristics of the invention as claimed below.

## Claims

1. Transport and piling machine for magnetic and non-magnetic sheets, for facilitating the transport and piling of all types of sheeting, whether magnetic or non-magnetic, comprising:
• an initial feeder assembly, consisting of roller shoes (1), a feed belt (4), sheet (9) gripping systems of vacuum pumps (6) and permanent neodymium magnets (5);
• a set of mechanisms for transferring the sheet (9) to the conveyer belt (10), by a servomotor (7); and
• a transport and piling assembly consisting of: a) sheet (9) transfer zone 1, the sheet being held to the conveyer belt (10) by the vacuum pumps (14) and the vacuum heads (17) holding the sheets by suction through the holes (16) made in the conveyer belt (10) for non-ferromagnetic sheets or by electromagnets (13) for magnetic sheets, b) movement zone 2, where the sheets (9) are transported by permanent magnets (13), for magnetic sheets, or by vacuum pumps (14), vacuum heads (17), held by suction through the holes (16) made in the conveyer belt (10), for non-magnetic sheets, c) piling zone 3, where the sheet (9) held by magnets which lose their magnetic force with the flow of the electric current is released from the conveyer belt (10) when said sheet reaches the piling zone (18), for magnetic sheets, and by way of vacuum pumps, stopping the suction when the sheet (9) is over the piling position (18), for non-ferromagnetic sheets, piling one upon another for the next operation.
